# EUROPEAN PATENT SPECIFICATION

(11) **EP 1 739 851 B1**
(45) Date of publication and mention of the grant of the patent: **05.01.2011**
(21) Application number: 04771027.2
(22) Date of filing: 29.07.2004
(51) Int. Cl.: G06K 7/00, H04B 1/59

(54) **RADIO COMMUNICATION CONTROL APPARATUS AND RADIO COMMUNICATION SYSTEM**
FUNKKOMMUNIKATIONSKONTROLLVORRICHTUNG UND FUNKKOMMUNIKATIONSSYSTEM
APPAREIL DE COMMANDE DE COMMUNICATION RADIO ET SYSTÈME DE COMMUNICATION RADIO

(43) Date of publication of application: 03.01.2007
(73) Proprietor: MITSUBISHI ELECTRIC CORPORATION, Chiyoda-ku Tokyo 100-8310 (JP)
(72) Inventor: TAIRA, Akinori, Mitsubishi Electric Corporation, Tokyo 100-8310 (JP)
(74) Representative: Pfenning, Meinig & Partner GbR
(86) International application number: PCT/JP2004/010814
(87) International publication number: WO 2006/011208

(56) References cited:
- EP-A- 0 797 318
- JP-A- 7 162 933
- JP-A- 8 265 832
- JP-A- 8 307 330
- JP-A- 9 261 170
- JP-A- 10 293 824
- JP-A- 2002 033 680
- JP-A- 2003 283 367

## Description

### TECHNICAL FIELD

The present invention relates to a radio-communication control apparatus and a radio communication system that perform communication with a plurality of radio tags.

### BACKGROUND ART

Developments of a radio frequency identification (RFID) communication system have attracted a lot of attention in recent years, as a technology relating to a radio frequency identification device that electronically stores information based on a read/write command transmitted from an external device by radio communication such as radio waves (magnetic field) and transmits the stored information.

The RFID communication system includes a radio tag (RF tag) that holds (stores) information, and a read/write device (R/W device) that allows the information to be read from or written into the radio tag. In the RFID communication system, when the radio tag does not have a power source, the R/W device charges power to the radio tag and issues an information read request (transmits a read command) and an information write request (transmits a write command) with respect to the radio tag. The radio tag transmits the stored information, writes new information, and the like based on a command transmitted from the R/W device. Along with increase in a communicable distance between the radio tag and the R/W device in the RFID system, it has been desired to expand a service area by reading and writing information in a plurality of radio tags arranged, for example, in a wide area such as a large warehouse, by a plurality of R/W devices.

An RFID transponder described in US Patent Specification No. 2002/0175805 transmits and receives information by transponders located in a wide area by a plurality of R/W devices, time division multiple access (TDMA), and code division multiple access (CDMA). Further, one R/W device makes a plurality of radio tags perform reading and writing.

### DISCLOSURE OF INVENTION

### PROBLEM TO BE SOLVED BY THE INVENTION

However, in the conventional technique, collision and interference of information transmitted and received between the radio tag and the R/W device cannot be avoided between a plurality of R/W devices. Therefore, there has been a problem that the RFID system cannot be used in a wide area.

The present invention has been achieved in view of the above problems, and an object of the invention is to provide a radio-communication control apparatus and a radio communication system that can communicate with radio tags located in a wide area by a plurality of R/W devices.

### MEANS FOR SOLVING PROBLEM

To solve the above problems and to achieve the object, a radio-communication control apparatus according to claim 1 and a radio communication system as set forth in claim 8 is provided.

### EFFECT OF THE INVENTION

The radio-communication control apparatus according to the present invention can avoid interference in communication between the read/write devices, when the read/write device communicates with a plurality of radio tags, since information is transmitted from the read/write device to the radio tags at a transmission timing determined by a timing determining unit. Accordingly, the RFID communication system can be established in a wide service area by the read/write devices. As a result, the communication efficiency between R/W devices 1A to 1C and radio tags 5 can be improved.

### BRIEF DESCRIPTION OF DRAWINGS

Fig. 1 depicts a configuration of an RFID communication system according to a first embodiment;
Fig. 2 is a block diagram of a configuration of an R/W device according to the first embodiment;
Fig. 3 is a block diagram of a configuration of a radio-communication control apparatus according to the first embodiment;
Fig. 4 is a flowchart of an operation procedure performed by the RFID communication system according to the first embodiment;
Fig. 5 is a flowchart of a process procedure performed by the radio-communication control apparatus for obtaining information from the R/W device;
Fig. 6 is a flowchart of a process procedure performed by the R/W device to ascertain the presence of a radio tag;
Fig. 7 depicts SINR information;
Fig. 8 is a block diagram of a configuration of an R/W device according to a second embodiment;
Fig. 9 is a block diagram of a configuration of a radio-communication control apparatus according to the second embodiment;
Fig. 10 is a flowchart of an operation procedure performed by an RFID communication system according to the second embodiment;
Fig. 11 is a block diagram of a configuration of an R/W device according to a third embodiment;
Fig. 12 is a block diagram of a configuration of a radio-communication control apparatus according to the third embodiment;
Fig. 13 is a flowchart of an operation procedure performed by an RFID communication system according to the third embodiment;
Fig. 14 is a block diagram of a configuration of an R/W device according to a fourth embodiment;
Fig. 15 is a block diagram of a configuration of a radio-communication control apparatus according to the fourth embodiment;
Fig. 16 is an explanatory diagram of phase control of a transmission carrier; and
Fig. 17 is a flowchart of an operation procedure performed by an RFID communication system according to the

### fourth embodiment.

### EXPLANATIONS OF LETTERS OR NUMERALS

- 1A to 1C: R/W device
- 2: Radio-communication control apparatus
- 3: RFID communication system
- 5: Radio tag
- 11: Antenna
- 12: Modulating unit
- 13: Demodulating unit
- 14: Timing control unit
- 15: Tag counting unit
- 16: SINR measuring unit
- 17, 23: Communication I/F
- 18: Information generating unit
- 20: SINR collecting unit
- 21: Group determining unit
- 22: Transmission-timing determining unit
- 31: Transmission-power control unit
- 41: Transmission-timing determining unit
- 42: Interference-condition analyzing unit
- 43: Reception-signal combining unit
- 50: Carrier control unit
- 53: Carrier phase determining unit
- 100: SINR information

### BEST MODE(S) FOR CARRYING OUT THE INVENTION

Embodiments of an RFID communication system according to the present invention will be explained in detail below with reference to the drawings. The present invention is not limited to the embodiments.

### First Embodiment

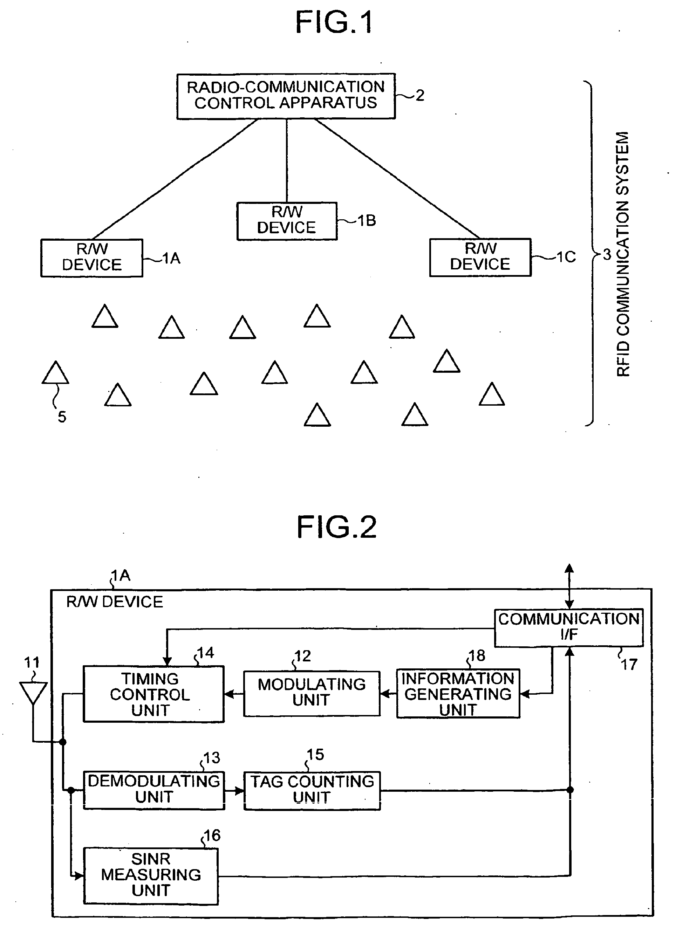

Fig. 1 depicts a configuration of an RFID communication system according to a first embodiment. A radio frequency identification (RFID) communication system (radio communication system) 3 includes a radio-communication control apparatus 2, read/write (R/W) devices 1A to 1C, and a plurality of radio tags 5.

In the RFID communication system 3, the radio-communication control apparatus 2 controls connection between the radio tags 5 and the R/W devices 1A to 1C. The radio-communication control apparatus 2 controls the R/W devices 1A to 1C, and respective R/W devices 1A to 1C connect to the radio rags 5 to make the radio rags 5 perform reading and writing of information. The R/W devices 1A to 1C and the radio-communication control apparatus 2 transmit and receive information by wireless communication or wire communication.

The radio tags 5 perform reading and writing of information based on an information read request (transmission of a read command), an information write request (transmission of a write command), and the like from the R/W devices 1A to 1C. The radio tags 5 and the R/W devices 1A to 1C transmit and receive information by RFID (radio frequency identification).

The configuration of the R/W devices 1A to 1C is explained next. Since the R/W devices 1A to 1C have the same configuration, the R/W device 1A is explained herein as an example. Fig. 2 is a block diagram of the configuration of the R/W device according to the first embodiment.

The R/W device 1A includes an antenna 11, a modulating unit 12, a demodulating unit 13, a timing control unit (communication control unit) 14, a tag counting unit 15, an SINR measuring unit (interference-information obtaining unit) 16, a communication I/F 17, and an information generating unit 18. The information generating unit 18 generates signals such as an information read request and an information write request as a transmission signal transmitted to the radio tags 5.

The modulating unit 12 converts (modulates) a transmission signal to the radio tag 5 generated by the information generating unit 18 into an RF signal. The timing control unit 14 controls a transmission timing of the RF signal to be transmitted to the radio tag 5, based on information relating to a communication permission received from the radio-communication control apparatus 2 (communication permission information described later) and the like.

The demodulating unit 13 converts (demodulates) a reception signal (response information) from the radio tag 5 received by the antenna 11 to extract reception information. The tag counting unit 15 analyzes the reception information extracted by the demodulating unit 13, and collects information relating to the radio tags 5. The tag counting unit 15 transmits the information relating to the radio tags 5 having completed communication to the communication I/F 17.

The SINR measuring unit 16 measures a signal-to-interference and noise ratio (SINR) signal of the radio tag 5 received by the antenna 11, and transmits a measurement value of the measured SINR (interference information) to the communication I/F 17.

The communication I/F 17 receives the signal transmitted from the radio-communication control apparatus 2, and transmits the information relating to the radio tags 5 collected by the tag counting unit 15 and the measurement value of the SINR measured by the SINR measuring unit 16 to the radio-communication control apparatus 2.

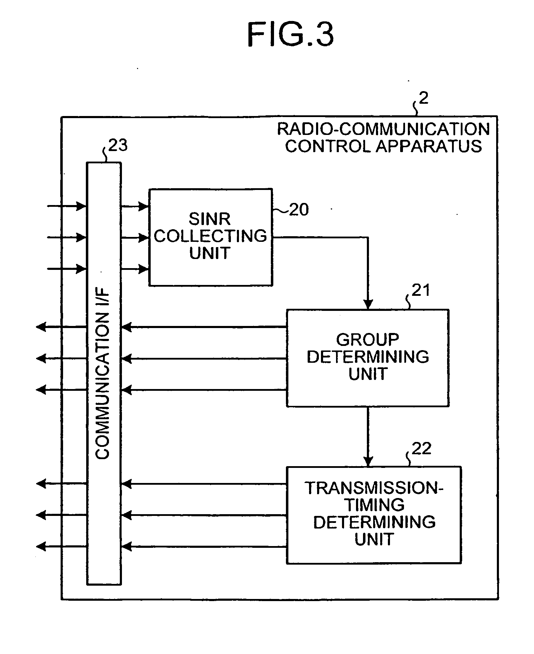

Fig. 3 is a block diagram of a configuration of the radio-communication control apparatus according to the first embodiment. The radio-communication control apparatus 2 includes an SINR collecting unit (collecting unit) 20, a group determining unit 21, a transmission-timing determining unit (timing determining unit) 22, and a communication I/F 23. The communication I/F 23 is connected to the SINR collecting unit 20, the group determining unit (allocating unit) 21, and the transmission-timing determining unit 22. The group determining unit 21 is connected to the SINR collecting unit 20 and the transmission-timing determining unit 22.

The SINR collecting unit 20 collects correspondence between the SINR of the reception signals from the radio tags 5 and the R/W devices 1A to 1C, based on the information relating to the radio tags 5 transmitted from the R/W devices 1A to 1C and the measurement values of the SINR. The SINR collecting unit 20 generates the correspondence between the SINR and the R/W devices 1A to 1C as SINR information (SINR information 100 described later).

The group determining unit 21 allocates the R/W devices 1A to 1C that transmit information to each radio tag 5, based on the SINR information from the SINR collecting unit 20. The group determining unit 21 generates information relating to the allocation of the R/W devices 1A to 1C with respect to the radio tags 5 (allocation information) (hereinafter, "grouping information"), and transmits the information to the communication I/F 23 and the transmission-timing determining unit 22.

The transmission-timing determining unit 22 determines the timing at which the respective R/W devices 1A to 1C transmit information, based on the grouping information from the group determining unit 21. The transmission-timing determining unit 22 transmits communication permission information to the R/W devices 1A to 1C based on the determined transmission timing.

The communication I/F 23 transmits and receives information between the R/W devices 1A to 1C and itself. The communication I/F 23 receives information transmitted from the R/W devices 1A to 1C, and transmits the grouping information generated by the group determining unit 21 and the communication permission information from the transmission-timing determining unit 22 to the R/W devices 1A to 1C.

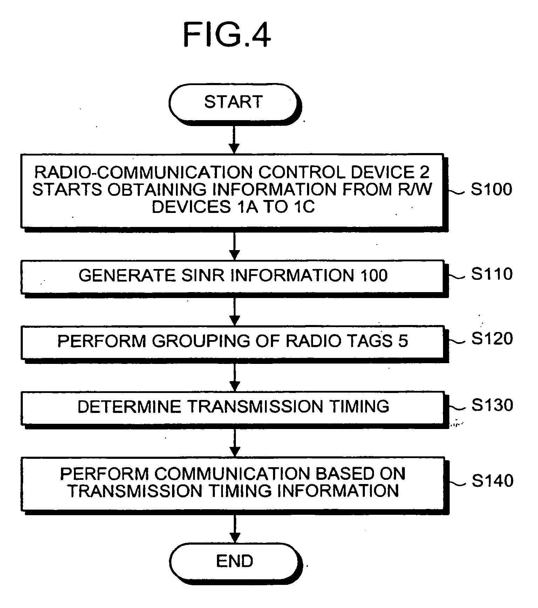

An operation procedure performed by the RFID communication system is explained next. Fig. 4 is a flowchart of the operation procedure performed by the RFID communication system according to the first embodiment. The radio-communication control apparatus 2 starts processing for obtaining information relating to the radio tags 5 connectable with the R/W devices 1A to 1C, from all the R/W devices 1A to 1C controlled by the radio-communication control apparatus 2 (step S100).

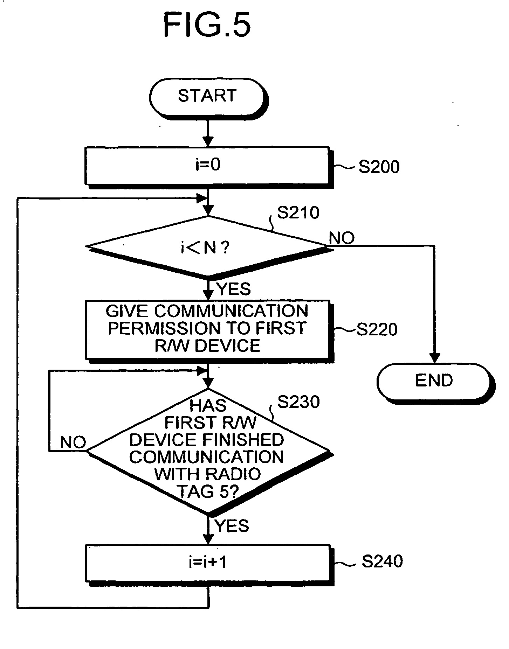

Details of processing by which the radio-communication control apparatus 2 obtains the information from the R/W devices 1A to 1C are explained. Fig. 5 is a flowchart of a process procedure performed by the radio-communication control apparatus for obtaining information from the R/W device.

The radio-communication control apparatus 2 collects information from N R/W devices (N is a natural number) controlled by the radio-communication control apparatus 2. The radio-communication control apparatus 2 collects information from, for example, three R/W devices 1A to 1C controlled by the radio-communication control apparatus 2. First, the transmission-timing determining unit 22 in the radio-communication control apparatus 2 generates information relating to a communication process procedure performed by the RFID communication system for obtaining information from the R/W devices 1A to 1C as initial transmission timing information.

The initial transmission timing information is used for performing processing in the RFID communication system, for example, in the order of from (1) to (6) shown below. That is, the R/W device 1A transmits response request information to the radio tags 5 (1). The R/W devices 1A to 1C add pieces of response information from the radio tags 5 (2). The R/W device 1B transmits response request information to the radio tags 5 (3). The R/W devices 1A to 1C add pieces of response information from the radio tags 5 (4). The R/W device 1C transmits response request information to the radio tags 5 (5). The R/W devices 1A to 1C add pieces of response information from the radio tags 5 (6).

The radio-communication control apparatus 2 performs initialization of i=0 (step S200). The radio-communication control apparatus 2 transmits the communication permission information to the R/W devices 1A to 1C in the order of from the first R/W device, based on the initial transmission timing information.

The radio-communication control apparatus 2 compares i with N to confirm whether information is collected from an ith (i=1 to N) R/W device, and confirms whether i<N (step S210). When i<N (step S210, Yes), the radio-communication control apparatus 2 transmits the communication permission information to the ith R/W device, to give communication permission to the ith R/W device (step S220). For example, the communication permission is given to the R/W device 1A.

When the communication permission is given to the R/W device 1A, the R/W device 1A transmits response request information to the radio tags 5. The respective R/W devices 1A to 1C then perform processing to ascertain the presence of the radio tag 5.

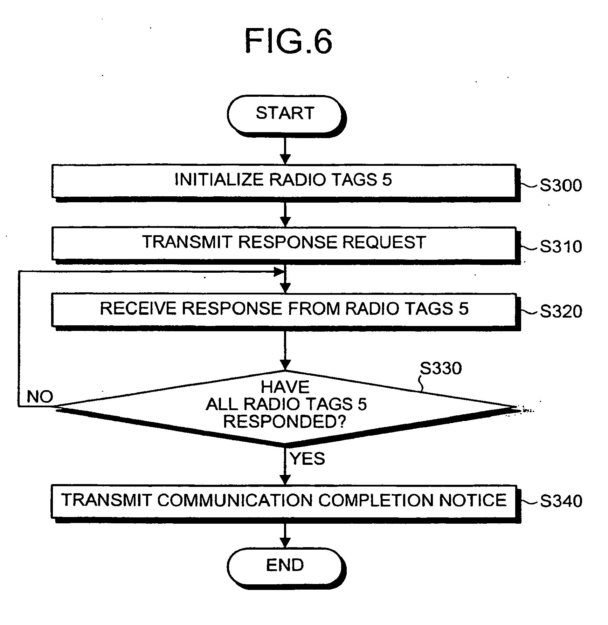

Fig. 6 is a flowchart of a process procedure performed by the R/W device to ascertain the presence of the radio tag. The R/W devices 1A to 1C initialize the communication between the radio tags 5 and the own device (step S300).

Upon reception of the communication permission, the information generating unit 18 in the R/W device 1A generates information (response request information) for requesting response with respect to the radio tags 5, to ascertain (recognize) the presence of the radio tags 5 located within the communication area of the own device.

The response request information generated by the information generating unit 18 is modulated by the modulating unit 12. The timing control unit 14 having received the communication permission information transmits the response request information to the radio tags 5 (step S310). The response request information is transmitted to all the radio tags 5 located within the range where radio waves transmitted from the R/W device 1A can reach (within the communication area).

Upon reception of the response request information from the R/W device 1A, the radio tags 5 transmit response information with respect to the response request information to the R/W device 1A having transmitted the response request information. The response information includes an identification number or the like for identifying the own radio tag 5 from other radio tags 5.

The response information transmitted from the radio tags 5 is received by the R/W devices 1A to 1C (step S320). The demodulating unit 13 having received the response information demodulates the response information, and transmits the demodulated response information to the tag counting unit 15. The tag counting unit 15 analyzes (adds up) the pieces of response information demodulated by the demodulating unit 13, to collect the information relating to the radio tags 5.

The SINR measuring unit 16 in the R/W devices 1A to 1C measures the SINR of the reception signal in the response information, at the time of receiving the response information from the radio tags 5. The SINR measuring unit 16 transmits the measurement results of the SINR to the communication I/F 17.

The R/W devices 1A to 1C confirm whether the response information has been received from all the radio tags 5, to which the response request information has been transmitted from the R/W device 1A (step S330). Regarding determination on whether responses from the radio tags 5 have been completed by the R/W devices 1A to 1C, it can be determined that responses from all the radio tags 5 have been completed at a point in time when predetermined time has passed, or after a response from one radio tag 5 has been received, when there is no response from the next radio tag 5 within predetermined time.

When the R/W devices 1A to 1C have not received response information from all the radio tags 5, to which the response request information has been transmitted from the R/W device 1A (step S330, No), processes at steps S320 and S330 are repeated.

When the R/W devices 1A to 1C receive the response information from all the radio tags 5 located within the communication area of the own device (step S330, Yes), the tag counting unit 15 generates communication completion information indicating that communication with the radio tags 5 has been completed. The communication completion information is transmitted to the communication I/F 17.

The tag counting unit 15 transmits collected radio tag information to the communication I/F 17 as the radio tag information. The communication I/F 17 transmits the radio tag information collected by the tag counting unit 15, and the measurement results of the SINR measured by the SINR measuring unit 16 to the radio-communication control apparatus 2. The communication I/F 17 further transmits the communication completion information generated by the information generating unit 18 to the radio-communication control apparatus 2 (step S340).

Upon reception of the communication completion information from the R/W device 1A, the radio-communication control apparatus 2 finishes the processing for obtaining the information from the R/W device 1A. The radio-communication control apparatus 2 then confirms whether the communication completion information has been received from the ith R/W device (step S230). After confirming that the communication completion information has been received from the ith R/W device, the radio-communication control apparatus 2 sets i=i+1 (step S240).

The radio-communication control apparatus 2 compares i with N, and confirms whether i<N (step S210). Thereafter, the radio-communication control apparatus 2 repeats processes from step S210 to step S240 until it is confirmed that it is not i<N. The radio-communication control apparatus 2 performs processes from step S210 to step S240 and from step S300 to step S340 with respect to the R/W devices 1A, 1B, and 1C.

When the radio-communication control apparatus 2 confirms that it is not i<N (that communication permission has been given to all the R/W devices 1A to 1C) (step S210, No), the radio-communication control apparatus 2 finishes the processing for obtaining information from the R/W devices 1A to 1C.

When the radio-communication control apparatus 2 receives the radio tag information and the measurement results of the SINR from the respective R/W devices 1A to 1C, the SINR collecting unit 20 generates the SINR information 100 based on the radio tag information and the measurement results of the SINR transmitted from the R/W devices 1A to 1C.

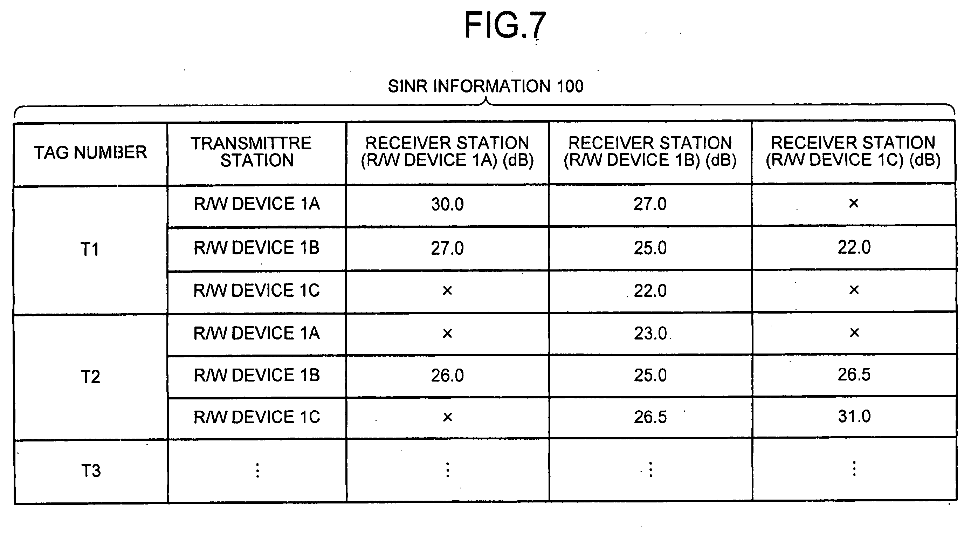

The SINR information is explained next. Fig. 7 depicts the SINR information 100 generated by the SINR collecting unit 20, wherein each tag number (identification ID) of the radio tags 5 that communicate with the R/W devices 1A to 1C in the RFID communication system is, respectively, T1, T2, and T3.

In the SINR information 100, values (db) of the SINR at the time of receiving the response information from the radio tags 5 with tag numbers T1 to T3 are indicated for each transmitter station and for each receiver station. The SINR indicates a ratio of signal power to interference power at the time of communication. An × mark is added to the SINR, which does not cause interference between the R/W devices.

The R/W devices 1A to 1C transmit the response request information to the radio tags 5, and receive the response information from the radio tags 5. Hence, the R/W devices 1A to 1C (receiver stations) receive the response information from the radio tag 5 (tag number T1) with respect to the response request information transmitted from the R/W device 1A (transmitter station) to the radio tag 5 with the tag number T1.

Moreover, the R/W devices 1A to 1C (receiver stations) receive the response information from the radio tag 5 (tag number T1) with respect to the response request information transmitted from the R/W device 1B (transmitter station) to the radio tag 5 with the tag number T1.

Furthermore, the R/W devices 1A to 1C (receiver stations) receive the response information from the radio tag 5 (tag number T1) with respect to the response request information transmitted from the R/W device 1C (transmitter station) to the radio tag 5 with the tag number T1.

The R/W devices 1A to 1C transmit the response request information similarly with respect to the radio tags 5 with the tag numbers T2 and T3, and receive the response information. Therefore, the SINR collecting unit 20 in a plurality of receiver stations obtains the response information with respect to the response request information transmitted from one transmitter station.

Upon generation of the SINR information 100, the SINR collecting unit 20 transmits the generated SINR information 100 to the group determining unit 21. The group determining unit 21 extracts a maximum value of the SINR for each radio tag 5, and a transmitter station and a receiver station corresponding to the SINR indicating the maximum value in the SINR information 100. The R/W device 1A as the transmitter station and the R/W device 1A as the receiver station are extracted with respect to the radio tag 5 with the tag number T1. Further, the R/W device 1C as the transmitter station and the R/W device 1C as the receiver station are extracted with respect to the radio tag 5 with the tag number T2, as transfer station information.

The group determining unit 21 groups the radio tags 5 for each transmitter station based on the extracted transfer station information (step S120). The group determining unit 21 groups the radio tags 5 into the radio tag 5 for which the R/W device 1A becomes the transmitter station, the radio tag 5 for which the R/W device 1B becomes the transmitter station, and the radio tag 5 for which the R/W device 1C becomes the transmitter station.

The group determining unit 21 transmits the tag numbers and the like of the grouped radio tags 5 to the communication I/F 23 and the transmission-timing determining unit 22 as grouping information. The communication I/F 23 transmits the grouping information from the group determining unit 21 to the R/W devices 1A to 1C.

The transmission-timing determining unit 22 determines the timing (transmission timing) when the R/W devices 1A to 1C transmit the information to the respective radio tags 5, based on the grouping information from the group determining unit 21. The transmission-timing determining unit 22 determines the transmission timing for each radio tag 5 corresponding to the R/W devices 1A to 1C (step S130) .

The transmission-timing determining unit 22 determines the transmission timing so that communication in the RFID communication system is performed according to, for example, the order of (10) and (11) described below. That is, the R/W device 1A (transmitter station) transmits information to the radio tag 5 with the tag number T1, and the R/W device 1A (receiver station) receives information from this radio tag 5 (10). The R/W device 1C (transmitter station) transmits information to the radio tag 5 with the tag number T2, and the R/W device 1C (receiver station) receives information from this radio tag 5 (11).

The transmission timing determined by the transmission-timing determining unit 22 is transmitted to the R/W devices 1A to 1C via the communication I/F 23 as transmission timing information. The R/W devices 1A to 1C receive the grouping information and the transmission timing information from the radio-communication control apparatus 2.

The information generating units 18 in the R/W devices 1A to 1C respectively generate information to be transmitted to the predetermined radio tags 5 based on the grouping information. The information to be transmitted to the radio tags 5 is modulated by the modulating unit 12. The timing control unit 14 transmits the information directed to the radio tags 5 modulated by the modulating unit 12 to the radio tags 5 at a predetermined timing based on the transmission timing information (step S140). The R/W devices 1A to 1C do not receive response information from the radio tag 5, for which the own device does not serve as a receiver station according to the grouping information.

Thus, since the radio-communication control apparatus 2 obtains the SINR information for each communication between the R/W devices 1A to 1C and the radio tags 5, the radio-communication control apparatus 2 can control the transmission timing for each communication between the R/W devices 1A to 1C and the radio tags 5.

In the first embodiment, while the radio-communication control apparatus 2 includes the group determining unit 21 and the transmission-timing determining unit 22, the radio-communication control apparatus 2 can include only the transmission-timing determining unit 22.

In the first embodiment, in the RFID communication system, while the R/W devices 1A to 1C and the radio-communication control apparatus 2 are provided separately, the function of the radio-communication control apparatus 2 can be included in the R/W devices 1A to 1C.

In the first embodiment, while the R/W devices in the RFID communication system 3 are three R/W devices 1A to 1C, the number of the R/W devices in the RFID communication system 3 can be two or four or more.

Thus, according to the first embodiment, since the timing at which the R/W devices 1A to 1C transmit information to the radio tags 5 is controlled, communication interference between the R/W devices 1A to 1C can be avoided when the R/W devices 1A to 1C communicate with the radio tags 5. Accordingly, the RFID communication system can be established in a wide service area by the R/W devices. Further, since the group determining unit 21 groups the radio tags 5 for each transmitter station based on the transfer station information, communication between the R/W devices 1A to 1C and a radio tag 5 having weak signal power can be omitted. As a result, the communication efficiency between the R/W devices 1A to 1C and the radio tags 5 can be improved.

### Second Embodiment

A second embodiment of the present invention is explained with reference to Figs. 1 and 7 to 10. In the second embodiment, when communication interference between the R/W devices 1A to 1C can be avoided, the transmission timing is determined so that information is transmitted from a plurality of R/W devices to the radio tags 5 simultaneously. Further, transmission power from the R/W devices 1A to 1C to the radio tags 5 is controlled so that the communication interference between the R/W devices 1A to 1C can be avoided.

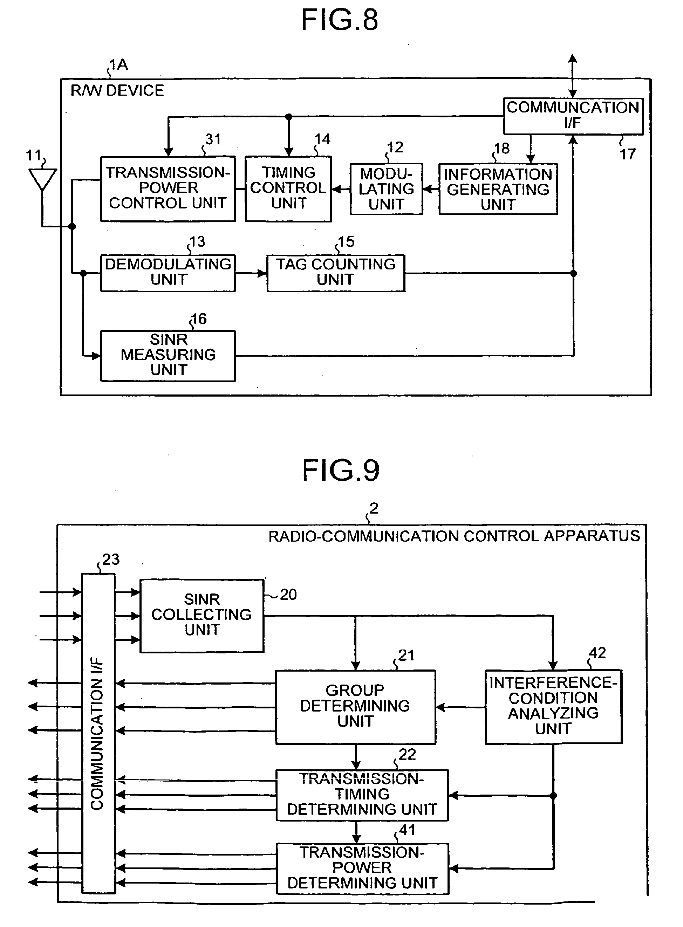

Fig. 8 is a block diagram of a configuration of the R/W device according to the second embodiment, and Fig. 9 is a block diagram of a configuration of the radio-communication control apparatus according to the second embodiment. Among respective constituent elements shown in Figs. 8 and 9, like reference numerals designate like constituent elements having the same function as those of the R/W devices 1A to 1C and the radio-communication control apparatus shown in Figs. 2 and 3, and redundant explanation is omitted.

As shown in Fig. 8, the R/W device 1A includes the antenna 11, the modulating unit 12, the demodulating unit 13, the timing control unit 14, the tag counting unit 15, the SINR measuring unit 16, the communication I/F 17, the information generating unit 18, and a transmission-power control unit 31. The transmission-power control unit 31 controls transmission power of an RF signal to be transmitted to the radio tags 5 based on information (transmission power information described later) received from the radio-communication control apparatus 2.

The radio-communication control apparatus 2 shown in Fig. 9 includes the SINR collecting unit 20, the group determining unit 21, the transmission-timing determining unit 22, the communication I/F 23, a transmission-power determining unit 41, and an interference-condition analyzing unit (interference-information extracting unit) 42.

The interference-condition analyzing unit 42 analyzes communication interference between the R/W devices 1A to 1C based on the SINR information 100 from the SINR collecting unit 20. The interference-condition analyzing unit 42 transmits an analysis result of communication interference between the R/W devices 1A to 1C to the group determining unit 21, the transmission-timing determining unit 22, and the transmission-power determining unit 41.

The transmission-power determining unit 41 determines the transmission power when the R/W devices 1A to 1C transmit information to the respective radio tags 5, based on the grouping information from the group determining unit 21 and the analysis result from the interference-condition analyzing unit 42.

The transmission-timing determining unit 22 in the second embodiment determines the transmission timing when the R/W devices 1A to 1C transmit information to the respective radio tags 5, based on the grouping information from the group determining unit 21 and the analysis result from the interference-condition analyzing unit 42.

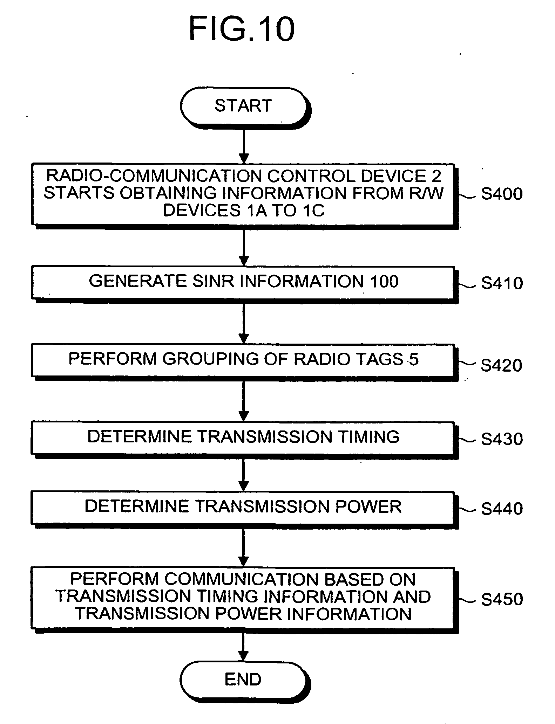

Fig. 10 is a flowchart of an operation procedure performed by the RFID communication system according to the second embodiment. The radio-communication control apparatus 2 starts processing for obtaining information relating to the radio tags 5 connectable with the R/W devices 1A to 1C, from all the R/W devices 1A to 1C controlled by the radio-communication control apparatus 2 (step S400). The radio-communication control apparatus 2 herein obtains the information from the R/W devices 1A to 1C by the same processing as in the first embodiment shown in Figs. 5 and 6, and therefore the explanation thereof is omitted.

The SINR collecting unit 20 in the radio-communication control apparatus 2 generates the SINR information 100 by collecting the SINR from the R/W devices 1A to 1C (step S410). Upon collection of the SINR information 100, the SINR collecting unit 20 in the radio-communication control apparatus 2 transmits the collected SINR information 100 to the group determining unit 21 and the interference-condition analyzing unit 42.

In the SINR information shown in Fig. 7, the R/W device 1A is extracted as the transmitter station and the R/W device 1A is extracted as the receiver station with respect to the radio tag 5 with the tag number T1. Further, the R/W device 1C is extracted as the transmitter station and the R/W device 1C is extracted as the receiver station with respect to the radio tag 5 with the tag number T2.

The interference-condition analyzing unit 42 analyzes communication interference among the R/W devices (extracts first combination information) based on the SINR information 100 from the SINR collecting unit 20. For example, the interference-condition analyzing unit 42 analyzes whether communication between the radio tag 5 with the tag number T1 and the R/W devices and communication between the radio tag 5 with the tag number T2 and the R/W devices interfere with each other.

With respect to the radio tag 5 with the tag number T1, when the transmitter station is the R/W device 1A and the receiver station is the R/W device 1A, the SINR value is 30.0 (dB). On the other hand, with respect to the radio tag 5 with the tag number T1, when the transmitter station is the R/W device 1C and the receiver station is the R/W device 1A, no interference occurs.

Furthermore, with respect to the radio tag 5 with the tag number T2, when the transmitter station is the R/W device 1C and the receiver station is the R/W device 1C, the SINR value is 31.0 (dB). On the other hand, with respect to the radio tag 5 with the tag number T2, when the transmitter station is the R/W device 1A and the receiver station is the R/W device 1C, no interference occurs.

Accordingly, transmission from the R/W device 1A to the radio tag 5 with the tag number T1 and transmission from the R/W device 1C to the radio tag 5 with the tag number T2 do not interfere with each other even if the transmission is performed simultaneously. Therefore, the interference-condition analyzing unit 42 determines that transmission from the R/W device 1A to the radio tag 5 with the tag number T1 and transmission from the R/W device 1C to the radio tag 5 with the tag number T2 can be performed simultaneously.

When the interference-condition analyzing unit 42 determines that interference occurs in the communication between the R/W devices and the radio tags 5, the interference-condition analyzing unit 42 further determines whether the interference can be avoided by reducing the transmission power of the R/W devices based on the SINR information 100 and information relating to minimum reception sensitivity. The minimum reception sensitivity is the lowest SINR at the time of receiving a signal, and is set beforehand in the interference-condition analyzing unit 42. The interference-condition analyzing unit 42 extracts a combination of the R/W device and the radio tag 5 (second combination information) by which the interference in the transmission from the R/W device to the radio tag 5 can be avoided.

The interference-condition analyzing unit 42 transmits the analysis result of communication interference between the R/W devices to the group determining unit 21, the transmission-timing determining unit 22, and the transmission-power determining unit 41. The group determining unit 21 groups the radio tags 5 for each transmitter station based on the transfer station information extracted by the interference-condition analyzing unit 42 and the analysis result of interference analyzed by the interference-condition analyzing unit 42 (step S420).

The group determining unit 21 transmits information of the grouped radio tags 5 to the communication I/F 23, the transmission-timing determining unit 22, and the transmission-power determining unit 41 as the grouping information. The communication I/F 23 transmits the grouping information from the group determining unit 21 to the R/W devices 1A to 1C.

The transmission-timing determining unit 22 determines the timing when the R/W devices 1A to 1C transmit information to the respective radio tags 5, based on the grouping information from the group determining unit 21 and the analysis result of interference from the interference-condition analyzing unit 42 (step S430).

The transmission-power determining unit 41 determines transmission power when the R/W devices 1A to 1C transmit information to the respective radio tags 5, based on the grouping information from the group determining unit 21 and the analysis result of interference from the interference-condition analyzing unit 42 (step S440).

The transmission timing determined by the transmission-timing determining unit 22 and the transmission power determined by the transmission-power determining unit 41 are transmitted to the R/W devices 1A to 1C via the communication I/F 23 as the transmission timing information and transmission power information.

The R/W devices 1A to 1C receive the grouping information, the transmission timing information, and the transmission power information from the radio-communication control apparatus 2. The information generating unit 18 in the respective R/W devices 1A to 1C generates information to be transmitted to the predetermined radio tags 5 based on the grouping information. The information to be transmitted to the radio tags 5 is modulated by the modulating unit 12.

The information directed to the radio tags 5 modulated by the modulating unit 12 is transmitted to the radio tags 5 via the timing control unit 14 and the transmission-power control unit 31. At this time, the timing control unit 14 controls so that the information to the radio tags 5 is transmitted at a predetermined transmission timing based on the transmission timing information, and the transmission-power control unit 31 controls so that the information to the radio tags 5 is transmitted with predetermined power based on the transmission power information (step S450).

Thus, according to the second embodiment, since the transmission timing and the transmission power by the R/W devices 1A to 1C are controlled based on the analysis result of communication interference between the R/W devices 1A to 1C, when the R/W devices 1A to 1C communicate with multiple radio tags 5, communication in which no interference is caused between the R/W devices can be performed simultaneously.

### Third Embodiment

A third embodiment of the present invention is explained with reference to Figs. 1, 7, and 11 to 13. In the third embodiment, the radio-communication control apparatus 2 diversely combines demodulated signals from the R/W devices 1A to 1C.

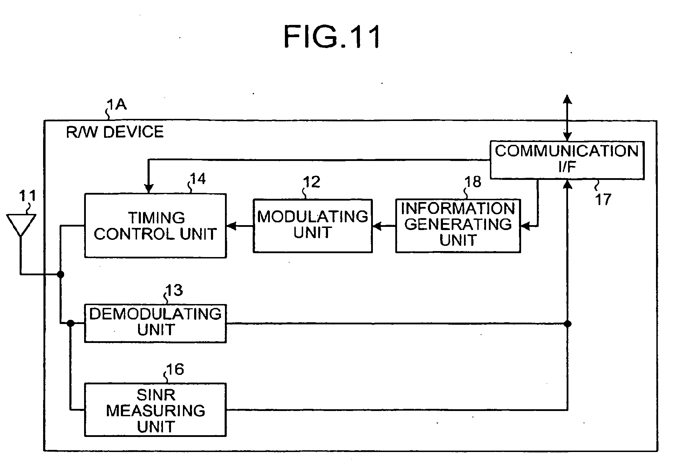

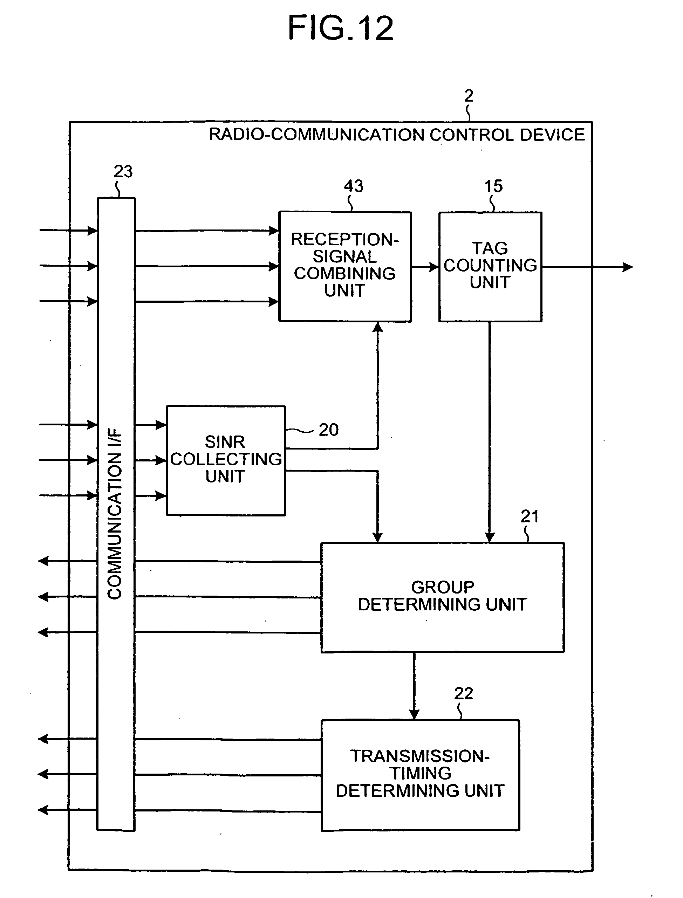

Fig. 11 is a block diagram of a configuration of an R/W device according to the third embodiment, and Fig. 12 is a block diagram of a configuration of the radio-communication control apparatus according to the third embodiment. Among respective constituent elements shown in Figs. 11 and 12, like reference numerals designate like constituent elements having the same function as those of the R/W device 1A and the radio-communication control apparatus 2 shown in Figs. 2 and 3, and redundant explanation is omitted.

As shown in Fig. 12, the radio-communication control apparatus 2 includes the SINR collecting unit 20, the group determining unit 21, the transmission-timing determining unit 22, the communication I/F 23, and a reception-signal combining unit (signal combining unit) 43. The reception-signal combining unit 43 diversity combines the demodulated signals transmitted from the R/W devices 1A to 1C. The reception-signal combining unit 43 performs predetermined weighting with respect to the demodulated signals at the time of diversity combining the demodulated signals based on the SINR information collected by the SINR collecting unit 20. The reception-signal combining unit 43 transmits the diversity-combined demodulated signal to the group determining unit 21 via the tag counting unit 15.

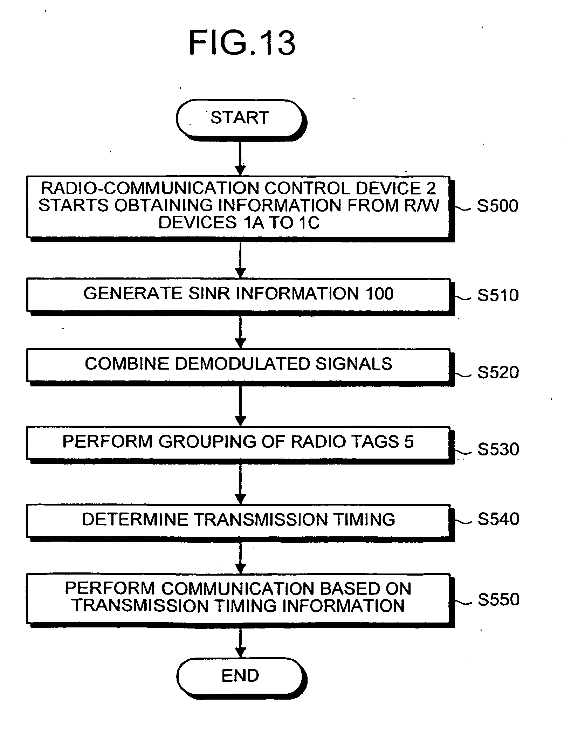

Fig. 13 is a flowchart of an operation procedure performed by an RFID communication system according to the third embodiment. The radio-communication control apparatus 2 starts processing for obtaining information relating to the radio tags 5 connectable with the R/W devices 1A to 1C, from all the R/W devices 1A to 1C controlled by the radio-communication control apparatus 2 (step S500). The radio-communication control apparatus 2 herein obtains the information from the R/W devices 1A to 1C by the same processing as in the first embodiment shown in Figs. 5 and 6, and therefore the explanation thereof is omitted.

The SINR collecting unit 20 in the radio-communication control apparatus 2 generates the SINR information 100 (step S510). Upon collection of the SINR information 100, the SINR collecting unit 20 transmits the collected SINR information 100 to the reception-signal combining unit 43 and the group determining unit 21.

The reception-signal combining unit 43 in the radio-communication control apparatus 2 receives the signal demodulated by the demodulating unit 13 in the R/W device 1A from the R/W device 1A. The reception-signal combining unit 43 in the radio-communication control apparatus 2 then diversity combines the demodulated signals from the R/W device 1A (step S520). At this time, the reception-signal combining unit 43 can perform predetermined weighting first with respect to the demodulated signals based on the SINR information 100, and then diversity combine the demodulated signals. The reception-signal combining unit 43 in the radio-communication control apparatus 2 transmits the combined demodulated signal to the tag counting unit 15 as reception information.

The tag counting unit 15 analyzes the demodulated signal (reception information) combined by the reception-signal combining unit 43 to collect the radio tag information. The tag counting unit 15 transmits the collected radio tag information to the group determining unit 21.

The group determining unit 21 extracts transfer station information based on the SINR information 100 from the SINR collecting unit 20 and the reception information from the reception-signal combining unit 43. The group determining unit 21 groups the radio tags 5 for each transmitter station based on the extracted transfer station information (step S530).

Thereafter, the radio-communication control apparatus 2 generates transmission timing information by the same processing as in the first embodiment. The group determining unit 21 transmits information of the grouped radio tags 5 as grouping information to the communication I/F 23 and the transmission-timing determining unit 22.
The communication I/F 23 transmits the grouping information from the group determining unit 21 to the R/W devices 1A to 1C.

The transmission-timing determining unit 22 determines the timing (transmission timing) when the R/W devices 1A to 1C transmit information to the respective radio tags 5, based on the grouping information from the group determining unit 21 (step S540). The transmission timing determined by the transmission-timing determining unit 22 is transmitted to the R/W devices 1A to 1C as the transmission timing information via the communication I/F 23. The R/W devices 1A to 1C receive the grouping information and the transmission timing information from the radio-communication control apparatus 2.

The information generating unit 18 in the R/W devices 1A to 1C generates information to be transmitted to the respective radio tags 5 based on the grouping information. The information to be transmitted to the respective radio tags 5 is modulated by the modulating unit 12. The timing control unit 14 transmits the information to be transmitted to the respective radio tags 5 modulated by the modulating unit 12 at a predetermined timing to the radio tags 5 based on the transmission timing information (step S550). Thus, since the radio-communication control apparatus 2 includes the reception-signal combining unit 43, the demodulated signals transmitted from the R/W devices 1A to 1C can be diversity-combined.

According to the third embodiment, since the demodulated signals transmitted from the R/W devices 1A to 1C can be diversity-combined, demodulation characteristics with respect to the signals transmitted from the radio tags 5 can be improved. Accordingly, the R/W devices 1A to 1C can communicate with multiple radio tags 5, and communication interference between the R/W devices 1A to 1C can be effectively avoided.

### Fourth Embodiment

A fourth embodiment of the present invention is explained with reference to Figs. 1, 7, 14, and 16. In the fourth embodiment, the radio-communication control apparatus 2 controls a phase of a transmission carrier of information from the R/W devices 1A to 1C to the radio tags 5 to avoid communication interference between the R/W devices 1A to 1C, when the R/W devices 1A to 1C communicate with the radio rags 5.

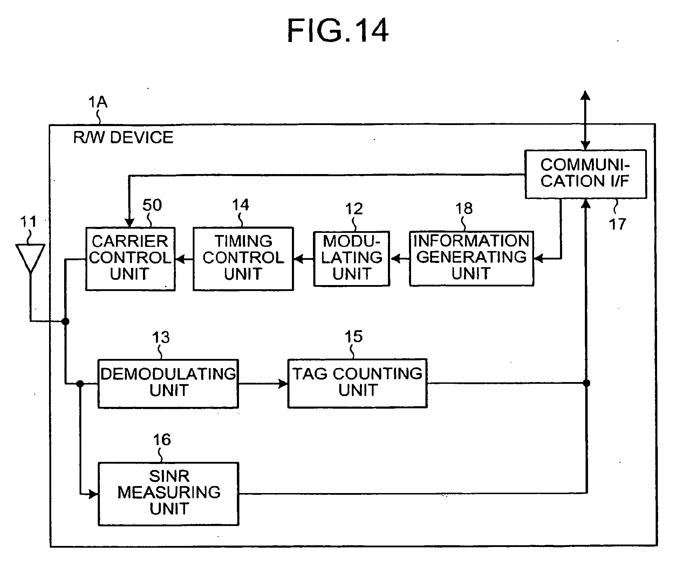

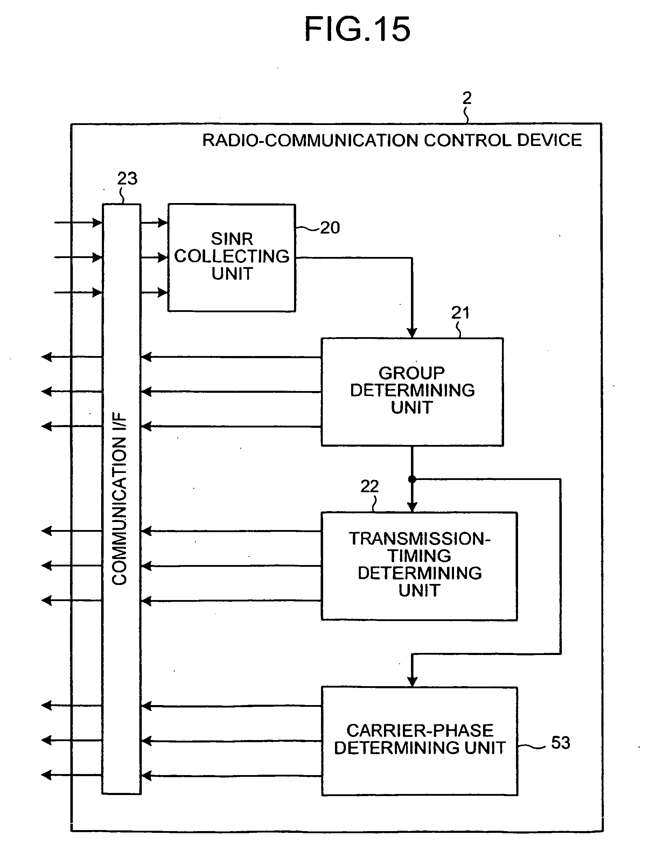

Fig. 14 is a block diagram of a configuration of an R/W device according to the fourth embodiment, and Fig. 15 is a block diagram of a configuration of an a radio-communication control apparatus according to the fourth embodiment. Among respective constituent elements shown in Figs. 14 and 15, like reference numerals designate like constituent elements having the same function as those of the R/W device 1A and the radio-communication control apparatus 2 shown in Figs. 2 and 3, and redundant explanation is omitted.

As shown in Fig. 14, the R/W device 1A includes the antenna 11, the modulating unit 12, the demodulating unit 13, the timing control unit 14, the tag counting unit 15, the SINR measuring unit 16, the communication I/F 17, the information generating unit 18, and a carrier control unit (phase control unit) 50. The carrier control unit 50 controls the phase of the carrier transmitted to the radio tags 5 based on information (carrier control information described later) received from the radio-communication control apparatus 2.

As shown in Fig. 15, the radio-communication control apparatus 2 includes the SINR collecting unit 20, the group determining unit 21, the transmission-timing determining unit 22, the communication I/F 23, and a carrier phase determining unit 53. The carrier phase determining unit 53 determines code expansion when the R/W devices 1A to 1C transmit information, based on the grouping information from the group determining unit 21. The carrier phase determining unit 53 transmits the determined code expansion to the R/W devices 1A to 1C as the carrier control information.

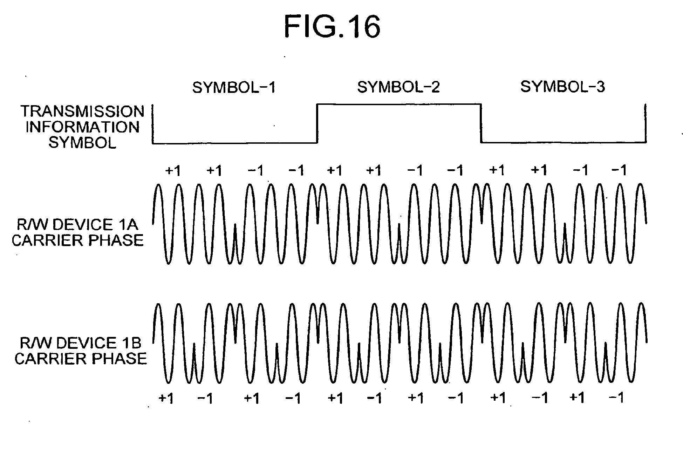

Fig. 16 is an explanatory diagram of phase control of a transmission carrier. Fig. 16 depicts a symbol rate of information transmitted by the R/W devices 1A to 1C, a carrier phase of the R/W device 1A, and a carrier phase of the R/W device 1B.

Code spreading is performed with respect to the carrier phase of the R/W device 1A and the carrier phase of the R/W device 1B at a predetermined rate or higher relative to the symbol rate (the R/W devices 1A and 1B control the phase of the transmission carrier), so that communication of the R/W devices 1A and 1B do not interfere with each other. When the number of spread chips is small, transmission timings of the R/W devices 1A to 1C are synchronized by using an orthogonal code.

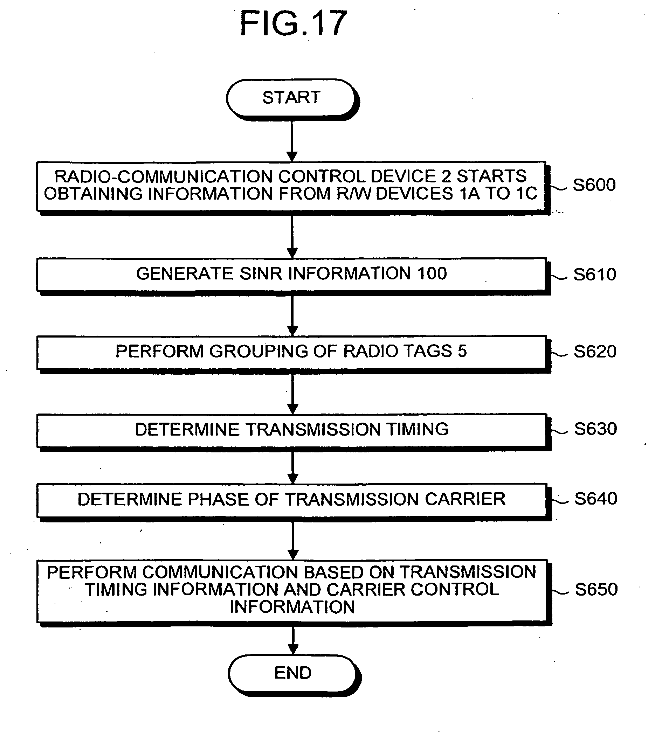

Fig. 17 is a flowchart of an operation procedure performed by an RFID communication system according to the fourth embodiment. The radio-communication control apparatus 2 starts processing for obtaining information relating to the radio tags 5 connectable with the R/W devices 1A to 1C, from all the R/W devices 1A to 1C controlled by the radio-communication control apparatus 2 (step 5600) .

The carrier phase determining unit 53 in the radio-communication control apparatus 2 generates instruction information (carrier control information) for making the R/W devices 1A to 1C perform code spreading at a predetermined rate or higher relative to the symbol rate shown in Fig. 17, to collect information from the R/W devices 1A to 1C.

The carrier phase determining unit 53 generates the carrier control information so as to perform code division multiplexing transmission or code spreading by an orthogonal code, for example, to avoid interference in the RFID communication system 3. The carrier control information is transmitted to the R/W devices 1A to 1C.

The carrier control unit 50 in the R/W devices 1A to 1C transmits the response request information to the radio tags 5 based on the carrier control information. The R/W devices 1A to 1C receive the response information from the radio tags 5 to collect radio tag information.

The SINR measuring unit 16 in the R/W devices 1A to 1C measures the SINR of the reception signal in the response information at the time of receiving the response information from the radio tags 5. The radio tag information and the SINR collected by the R/W devices 1A to 1C are transmitted to the radio-communication control apparatus 2.

The SINR collecting unit 20 in the radio-communication control apparatus 2 generates the SINR information 100 based on the radio tag information and the SINR (step S610), and transmits the generated SINR information 100 to the group determining unit 21.

The group determining unit 21 extracts transfer station information based on the SINR information, and groups the radio tags 5 for each transmitter station based on the extracted transfer station information (step S620). The group determining unit 21 groups the radio tags 5 according to the number of usable spread codes.

The group determining unit 21 transmits information of the grouped radio tags 5 to the communication I/F 23, the transmission-timing determining unit 22, and the carrier phase determining unit 53 as grouping information. The communication I/F 23 transmits the grouping information from the group determining unit 21 to the R/W devices 1A to 1C.

The transmission-timing determining unit 22 determines the timing (transmission timing) when the R/W devices 1A to 1C transmit information to the respective radio tags 5, based on the grouping information from the group determining unit 21 (step S630). The transmission timing determined by the transmission-timing determining unit 22 is transmitted to the R/W devices 1A to 1C as the transmission timing information via the communication I/F 23.

The carrier phase determining unit 53 determines the phase of the transmission carrier when the R/W devices 1A to 1C transmit information to the respective radio tags 5, based on the grouping information from the group determining unit 21 (step 5640) .

The carrier phase determining unit 53 determines the phase of the transmission carrier of the R/W devices 1A to 1C, which can cause communication interference due to, for example, overlapping of communicable ranges, and generates the carrier control information based on the determined phase of the transmission carrier.

The R/W devices 1A to 1C receive the grouping information, the transmission timing information, and the carrier control information from the radio-communication control apparatus 2. The information generating unit 18 in the R/W devices 1A to 1C generates the information to be transmitted to the respective radio tags 5 based on the grouping information. The information to be transmitted to the radio tags 5 is modulated by the modulating unit 12. The timing control unit 14 controls so that the information directed to the radio tags 5 modulated by the modulating unit 12 is transmitted to the radio tags 5 at a predetermined timing based on the transmission timing information. The carrier control unit 50 controls the phase of the transmission carrier based on the carrier control information with respect to the information to be transmitted to the radio tag 5 modulated by the modulating unit 12, and transmits the information to the radio tags 5 (step 5650).

According to the fourth embodiment, even when the communication areas of the R/W devices 1A to 1C overlap on each other, since the phase of the transmission carrier of the R/W devices 1A to 1C is controlled, simultaneous communication is possible in the communication between the R/W devices 1A to 1C and the radio tags 5. Further, when the information relating to the radio tags 5 connectable with the R/W devices 1A to 1C is to be obtained, simultaneous communication is possible in the communication between the R/W devices 1A to 1C and the radio tags 5. As a result, communication processing efficiency in the RFID communication system 3 can be improved.

### INDUSTRIAL APPLICABILITY

As described above, the radio-communication control apparatus and the radio communication system according to the present invention are suitable for communication with a plurality of radio tags.

## Claims

1. A radio-communication control apparatus (2) that controls a plurality of read/write devices (1A, 1B, 1C) that perform reading and writing of data with respect to a plurality of radio tags (5) that do not have a power source the radio-communication control apparatus (2) comprising:
a collecting unit (20) that collects, from the read/write devices (1A, 1B, 1C), interference information on interference of reception signals received from the radio tags (5) by the read/write devices (1A, 1B, 1C); said interference information indicating values of signal-to-interference and noise ratio (SINR) at the time of receiving response from the radio tags (5) with respective tag numbers for each read/write transmitter station and for each read/write receiver station; and
a timing determining unit (22) that determines a transmission timing at which the read/write devices 1, 1B, 1C) transmit information to the radio tags (5), based on the interference information collected by the collecting unit (20), wherein
the control apparatus controls the read/write devices (1A, 1B, 1C) to transmit information to the radio tags (5) based on the transmission timing determined by the timing determining unit (22).

2. The radio-communication control apparatus (2) according to claim 1, further comprising:
an allocating unit (21) that generates allocation information relating to allocation of the read/write devices (1A, 1B, 1C) that transmit information to the respective radio tags (5) and allocation of the read/write devices (1A, 1B, 1C) that receive information from the respective radio tags (5), based on the interference information collected by the collecting unit (20), wherein the control apparatus controls the read/write devices (1A, 1B, 1C) to transmit information to predetermined radio tags (5) based on the allocation information generated by the allocating unit (21).

3. The radio-communication control apparatus (2) according to claim 1, further comprising:
an interference-information extracting unit (42) that extracts, as first combination information, a combination of the read/write device and the radio tag, with which a communication interference does not occur between the read/write devices (1A, 1B, 1C) when the read/write devices (1A, 1B, 1C) transmit information to the radio tags (5), based on the interference information collected by the collecting unit (20), wherein
the timing determining unit (22) determines the transmission timing at which the read/write devices (1A, 1B, 1C) transmit information to the radio tags (5), based on the first combination information extracted by the interference-information extracting unit (42).

4. The radio-communication control apparatus (2) according to claim 3, further comprising:
a transmission-power determining unit (41) that determines transmission power of the read/write devices (1A, 1B, 1C) when the read/write devices (1A, 1B, 1C) transmit information to the radio tags (5), wherein
the interference-information extracting unit (42) extracts, as second combination information, a combination of the read/write device and the radio tag, with which a communication interference can be avoided between the read/write devices (1A, 1B, 1C) by controlling the transmission power when the read/write device transmits information to the radio tag, from among combinations of the read/write device and the radio tag, with which a communication interference occurs between the read/write devices (1A, 1B, 1C) when the read/write devices (1A, 1B, 1C) transmit information to the radio tags (5), based on the interference information collected by the collecting unit (20), and
the transmission-power determining unit (41) determines the transmission power of the read/write devices (1A, 1B, 1C) based on the second combination information extracted by the interference-information extracting unit (42).

5. The radio-communication control apparatus (2) according to claim 3, wherein
the interference-information extracting unit (42) extracts, as second combination information, a combination of the read/write device and the radio tag, with which a communication interference can be avoided between the read/write devices (1A, 1B, 1C) by controlling the transmission power when the read/write device transmits information to the radio tag, from among combinations of the read/write device and the radio tag, with which a communication interference occurs between the read/write devices (1A, 1B, 1C) when the read/write devices (1A, 1B, 1C) transmit information to the radio tags (5), based on the interference information collected by the collecting unit (20), and
the timing determining unit (22) determines the transmission timing at which the read/write devices (1A, 1B, 1C) transmit information to the radio tags (5), based on the second combination information extracted by the interference-information extracting unit (42).

6. The radio-communication control apparatus (2) according to claim 1, further comprising:
a signal combining unit (43) that diversity-combines reception signals received from the radio tags (5) by the read/write devices (1A, 1B, 1C).

7. The radio-communication control apparatus (2) according to claim 1, further comprising:
a phase control unit (53) that controls a phase of a transmission carrier transmitted by the read/write devices (1A, 1B, 1C).

8. A radio communication system (3) comprising:
a plurality of radio tags (5) that do not have a power source ;
a plurality of read/write devices (1A, 1B, 1C) that perform reading and writing of data with respect to the radio tags (5); and
a radio-communication control apparatus (2) that controls communication of the read/write devices (1A, 1B, 1C), wherein
the read/write devices (1A, 1B, 1C) include
an interference-information obtaining unit (16) that obtains interference information relating to interference of reception signals received from the radio tags (5), said interference information indicating values of signal to interference and noise ratio at the time of receiving response from the radio tags (5) with respective tag numbers for each read/write transmitter station and for each read/write receiver station; and
a communication control unit (14) that performs a communication with the radio tags (5) based on a control instruction from the radio-communication control apparatus (2),
the radio-communication control apparatus (2) includes
a collecting unit (20) that collects the interference information obtained by the interference-information obtaining unit from the read/write devices (1A, 1B, 1C); and
a timing determining unit (22) that determines a timing at which the read/write devices (1A, 1B, 1C) transmit information to the radio tags (5) as the control instruction for the read/write devices (1A, 1B, 1C), based on the interference information collected by the collecting unit (20), and
the communication control unit (14) transmits information to the radio tags (5) based on the control information determined by the timing determining unit (22).

## Patentansprüche

1. Funkverkehr-Steuerapparat (2), der eine Vielzahl an Lese-/Schreibgeräten (1A, 1B, 1C) steuert, die Lesen und Schreiben von Daten hinsichtlich einer Vielzahl an Funketiketten, die keine Leistungsquelle aufweisen, ausführen, wobei die Funkverkehr-Steuervorrichtung (2) enthält:
eine Sammeleinheit (20), die von den Lese-/Schreibgeräten (1A, 1B, 1C) Interferenzinformationen über die Interferenz von Empfangssignalen, die durch die Lese-/Schreibgeräte (1A, 1B, 1C) von den Funketiketten (5) empfangen werden, sammelt, wobei die Interferenzinformationen für jede Lese-/Schreibübertragungsstation und jede Lese-/Schreibempfangsstation Werte des Signalzu-Interferenz- und Rauschverhältnisses (SINR) zur Zeit des Empfangens einer Antwort von den Funketiketten mit entsprechenden Etikettennummern angeben; und
eine Taktbestimmungseinheit (22), die basierend auf durch die Sammeleinheit (20) gesammelte Interferenzinformationen ein Übertragungstakt bestimmt, in dem die Lese-/Schreibgeräte (1A, 1B, 1C) Informationen an die Funketiketten (5) übermitteln, wobei
der Steuerapparat die Lese-/Schreibgeräte (1A, 1B, 1C) derart steuert, dass dieser basierend auf dem durch die Taktbestimmungseinheit (22) bestimmten Übertragungstakt Informationen an die Funketiketten (5) übertragen.

2. Funkverkehr-Steuervorrichtung (2) nach Anspruch 1, die weiter aufweist:
eine Zuordnungseinheit (21), die basierend auf den von der Sammeleinheit (20) gesammelten Interferenzinformationen Zuordnungsinformationen bezüglich der Zuordnung der Lese-/Schreibgeräte (1A, 1B, 1C), die Informationen zu den jeweiligen Funketiketten (5) übertragen, und der Zuordnung der Lese-/Schreibgeräte (1A, 1B, 1C), die Informationen von den jeweiligen Funketiketten (5) empfangen, erzeugt, wobei
die Steuervorrichtung die Lese-/Schreibgeräte (1A, 1B, 1C) derart steuert, dass sie basierend auf den von der Zuordnungseinheit (21) erzeugten Zuordnungsinformationen Informationen zu bestimmten Funketiketten (5) übertragen.

3. Funkverkehr-Steuervorrichtung (2) nach Anspruch 1, die weiter aufweist:
eine Interferenzinformations-Extraktionseinheit (42), die basierend auf den von der Sammeleinheit (20) gesammelten Interferenzinformationen als erste Kombinationsinformation eine Kombination des Lese-/Schreibgeräts (1A, 1B, 1C) und des Funketiketts extrahiert, bei der keine Funkverkehrsinterferenz zwischen den Lese-/ Schreibgeräten (1A, 1B, 1C) auftritt, wenn die Lese-/Schreibgeräte (1A, 1B, 1C) Informationen an die Funketiketten (5) übertragen, wobei
die Taktbestimmungseinheit (22) basieren auf der ersten, durch die Interferenzinformations-Extraktionseinheit (42) extrahierte Kombinationsinformation den Übertragungstakt festlegt, in dem die Lese-/Schreibgeräte (1A, 1B, 1C) Informationen an die Funketiketten (5) übertragen.

4. Funkverkehr-Steuervorrichtung (2) nach Anspruch 3, die weiter aufweist:
eine Übertragungsleistungs-Bestimmungseinheit (41), die die Übertragungsleistung der Lese-/Schreibgeräte (1A, 1B, 1C) bestimmt, wenn die Lese-/Schreibgeräte (1A, 1B, 1C) Informationen an die Funketiketten (5) übertragen, wobei
die Interferenzinformations-Extraktionseinheit (42) basierend auf den von der Sammeleinheit (20) gesammelten Interferenzinformationen aus Kombinationen des Lese-/Schreibgeräts (1A, 1B, 1C) und des Funketiketts, bei denen eine Funkverkehrsinterferenz zwischen den Lese-/ Schreibgeräten (1A, 1B, 1C) auftritt, wenn die Lese-/Schreibgeräte (1A, 1B, 1C) Informationen an die Funketiketten übertragen, als zweite Kombinationsinformation eine Kombination des Lese-/ Schreibgeräts (1A, 1B, 1C) und des Funketiketts extrahiert, bei der eine Funkverkehrsinterferenz zwischen den Lese-/Schreibgeräten (1A, 1B, 1C) durch Steuerung der Übertragungsleistung vermieden werden kann, wenn das Lese-/Schreibgerät (1A, 1B, 1C) Informationen an das Funketikett überträgt, und
die Übertragungsleistungs-Bestimmungseinheit (41) die Übertragungsleistung der Lese-/ Schreibgeräte (1A, 1B, 1C) basierend auf der zweiten, durch die Interferenzinformations-Extraktionseinheit (42) extrahierten Kombinationsinformation bestimmt.

5. Funkverkehr-Steuervorrichtung (2) nach Anspruch 3, wobei
die Interferenzinformations-Extraktionseinheit (42) basierend auf den von der Sammeleinheit (20) gesammelten Interferenzinformationen aus Kombinationen des Lese-/Schreibgeräts (1A, 1B, 1C) und des Funketiketts, mit denen eine Funkverkehrsinterferenz zwischen den Lese-/ Schreibgeräten (1A, 1B, 1C) auftritt, wenn die Lese-/Schreibgeräte (1A, 1B, 1C) Informationen an die Funketiketten übertragen, als zweite Kombinationsinformation eine Kombination des Lese-/ Schreibgeräts (1A, 1B, 1C) und des Funketiketts extrahiert, bei der eine Funkverkehrsinterferenz zwischen den Lese-/Schreibgeräten (1A, 1B, 1C) durch Steuerung der Übertragungsleistung vermieden werden kann, wenn das Lese-/Schreibgerät (1A, 1B, 1C) Informationen an das Funketikett überträgt, und
die Taktbestimmungseinheit (22) basierend auf der zweiten, von den durch die Interferenzinformations-Extraktionseinheit (42) extrahierten Kombinationsinformation den Übertragungstakt bestimmt, in dem die Lese-/Schreibgeräte (1A, 1B, 1C) Informationen an die Funketiketten (5) übertragen.

6. Funkverkehr-Steuervorrichtung (2) nach Anspruch 1, die weiter enthält:
eine Signalkombinierungseinheit (43), die Empfangssignale, die durch die Lese-/Schreibgeräte (1A, 1B, 1C) von den Funketiketten (5) empfangen werden, diversitätskombiniert.

7. Funkverkehr-Steuervorrichtung (2) nach Anspruch 1, die weiter aufweist:
eine Phasensteuereinheit (53), die eine Phase eines Übertragungsträgers, der durch die Lese-/Schreibgeräte (1A, 1B, 1C) übertragen wird, steuert.

8. Funkverkehr-System (3) enthaltend:
eine Vielzahl an Funketiketten (5), die keine Leistungsquelle aufweisen;
eine Vielzahl an Lese-/Schreibgeräten (1A, 1B, 1C), die das Lesen und Schreiben von Daten hinsichtlich der Funketiketten ausführen; und
eine Funkverkehr-Steuervorrichtung (2), die den Funkverkehr der Lese-/Schreibgeräte (1A, 1B, 1C) steuert, wobei
die Lese-/Schreibgeräte (1A, 1B, 1C)
eine Interferenzinformations-Erlangungseinheit (16) aufweisen, die Interferenzinformationen hinsichtlich der Interferenz der von den Funketiketten empfangenen Empfangssignale erhält, wobei die Interferenzinformationen für jede Lese-/Schreibübertragungsstation und jede Lese-/Schreibempfangsstation Werte des Signal-zu-Interferenz- und Rauschverhältnisses (SINR) zur Zeit des Empfangens einer Antwort von den Funketiketten mit entsprechenden Etikettennummern angeben; und
eine Kommunikationssteuereinheit (14), die basierend auf einer Steueranweisung von dem Funkverkehr-Steuerapparat (2) Funkverkehr mit den Funketiketten ausführt, enthalten; wobei
der Funkverkehr-Steuerapparat (2)
eine Sammeleinheit (20), die durch die Interferenzinformation-Erlangungseinheit (16) von den Lese-/Schreibgeräten (1A, 1B, 1C) erhaltene Interferenzinformationen sammelt; und
eine Taktbestimmungseinheit (22), die basierend auf den durch die Sammeleinheit (20) gesammelten Interferenzinformationen einen Zeittakt bestimmt, in dem die Lese-/Schreibgeräte (1A, 1B, 1C) Informationen an die Funketiketten (5) als Steueranweisung für die Lese-/Schreibgeräte (1A, 1B, 1C) übermitteln, enthält; und wobei
die Kommunikationssteuereinheit (14) basierend auf der durch die Taktbestimmungseinheit (22) bestimmte Steuerinformation Informationen an die Funketiketten überträgt.

## Revendications

1. Appareil (2) de commande de communication radio qui commande une pluralité de dispositifs de lecture/écriture (1A, 1B, 1C) qui effectuent la lecture et l'écriture de données par rapport à une pluralité d'étiquettes radio (5) qui n'ont pas de source d'énergie, l'appareil de commande de communication radio (2) comprenant :
une unité collectrice (20) qui recueille, à partir des dispositifs de lecture/écriture (1A, 1B, 1C), des informations d'interférence lors de l'interférence de signaux de réception reçus des étiquettes radio (5) par les dispositifs de lecture/écriture (1A, 1B, 1C) ; lesdites informations d'interférence indiquant des valeurs de rapport de signal/brouillage plus bruit (SINR) au moment de la réception d'une réponse des étiquettes radio (5) avec des numéros d'étiquettes respectifs pour chaque poste émetteur de lecture/écriture et pour chaque poste récepteur de lecture/écriture ; et
une unité (22) de détermination de synchronisation qui détermine une synchronisation de transmission à laquelle les dispositifs de lecture/écriture (1A, 1B, 1C) transmettent des informations aux étiquettes radio (5) en fonction des informations d'interférence recueillies par l'unité collectrice (20), dans lequel :
l'appareil de commande ordonne aux dispositifs de lecture/écriture (1A, 1B, 1C) de transmettre des informations aux étiquettes radio (5) en fonction de la synchronisation de la transmission déterminée par l'unité (22) de détermination de synchronisation.

2. Appareil (2) de commande de communication radio selon la revendication 1, comprenant également :
une unité d'allocation (21) qui génère des informations d'allocation concernant l'allocation des dispositifs de lecture/écriture (1A, 1B, 1C) qui transmettent des informations aux étiquettes radio respectives (5) et l'allocation des dispositifs de lecture/écriture (1A, 1B, 1C) qui reçoivent des informations des étiquettes radio respectives (5), en fonction des informations d'interférence recueillies par l'unité collectrice (20), dans lequel :
l'appareil de commande ordonne aux dispositifs de lecture/écriture (1A, 1B, 1C) de transmettre des informations à des étiquettes radio prédéterminées (5) en fonction des informations d'allocation générées par l'unité d'allocation (21).

3. Appareil (2) de commande de communication radio selon la revendication 1, comprenant également :
une unité (42) d'extraction d'informations d'interférence qui extrait, en tant que premières informations de combinaison, une combinaison du dispositif de lecture/écriture et de l'étiquette radio, avec laquelle une interférence de communication ne se produit pas entre les dispositifs de lecture/écriture (1A, 1B, 1C) lorsque les dispositifs de lecture/écriture (1A, 1B, 1C) transmettent des informations aux étiquettes radio (5) en fonction des informations d'interférence recueillies par l'unité collectrice (20), dans lequel :
l'unité (22) de détermination de synchronisation détermine la synchronisation de transmission à laquelle les dispositifs de lecture/écriture (1A, 1B, 1C) transmettent des informations aux étiquettes radio (5), en fonction des premières informations de combinaison extraites par l'unité (42) d'extraction d'informations d'interférence.

4. Appareil (2) de commande de communication radio selon la revendication 3, comprenant également :
une unité (41) de détermination de puissance de transmission qui détermine la puissance de transmission des dispositifs de lecture/écriture (1A, 1B, 1C) lorsque les dispositifs de lecture/écriture (1A, 1B, 1C) transmettent des informations aux étiquettes radio (5), dans lequel :
l'unité (42) d'extraction d'informations d'interférence extrait, en tant que secondes informations de combinaison, une combinaison du dispositif de lecture/écriture et de l'étiquette radio, avec laquelle une interférence de communication peut être évitée entre les dispositifs de lecture/écriture (1A, 1B, 1C) en réglant la puissance de transmission lorsque le dispositif de lecture/écriture transmet des informations à l'étiquette radio, parmi des combinaisons du dispositif de lecture/écriture et de l'étiquette radio, avec lesquelles une interférence de communication se produit entre les dispositifs de lecture/écriture (1A, 1B, 1C) lorsque les dispositifs de lecture/écriture (1A, 1B, 1C) transmettent des informations aux étiquettes radio (5), en fonction des informations d'interférence recueillies par l'unité collectrice (20), et
l'unité (41) de détermination de puissance de transmission détermine la puissance de transmission des dispositifs de lecture/écriture (1A, 1B, 1C) en fonction des secondes informations de combinaison extraites par l'unité (42) d'extraction d'informations d'interférence.

5. Appareil (2) de commande de communication radio selon la revendication 3, dans lequel :
l'unité (42) d'extraction d'informations d'interférence extrait, en tant que secondes informations de combinaison, une combinaison du dispositif de lecture/écriture et de l'étiquette radio, avec laquelle une interférence de communication peut être évitée entre les dispositifs de lecture/écriture (1A, 1B, 1C) en commandant la puissance de transmission lorsque le dispositif de lecture/écriture transmet des informations à l'étiquette radio, parmi des combinaisons du dispositif de lecture/écriture et de l'étiquette radio, avec lesquelles une interférence de communication se produit entre les dispositifs de lecture/écriture (1A, 1B, 1C) lorsque les dispositifs de lecture/écriture (1A, 1B, 1C) transmettent des informations aux étiquettes radio (5), en fonction des informations d'interférence recueillies par l'unité collectrice (20), et
l'unité (22) de détermination de synchronisation détermine la synchronisation de transmission à laquelle les dispositifs de lecture/écriture (1A, 1B, 1C) transmettent des informations aux étiquettes radio (5), en fonction des secondes informations de combinaison extraites par l'unité (42) d'extraction d'informations d'interférence.

6. Appareil (2) de commande de communication radio selon la revendication 1, comprenant également :
une unité (43) de combinaison de signaux qui combine en diversité des signaux de réception issus des étiquettes radio (5) reçus par les dispositifs de lecture/écriture (1A, 1B, 1C).

7. Appareil (2) de commande de communication radio selon la revendication 1, comprenant également :
une unité (53) de commande de phase qui commande une phase d'un support de transmission transmis par les dispositifs de lecture/écriture (1A, 1B, 1C).

8. Système de communication radio (3), comprenant :
une pluralité d'étiquettes radio (5) qui n'ont pas de source d'énergie ;
une pluralité de dispositifs de lecture/écriture (1A, 1B, 1C) qui effectuent la lecture et l'écriture de données par rapport aux étiquettes radio (5) ; et
un appareil (2) de commande de communication radio qui commande la communication des dispositifs de lecture/écriture (1A, 1B, 1 C), dans lequel :
les dispositifs de lecture/écriture (1A, 1B, 1C) comprennent :
une unité (16) d'obtention d'informations d'interférence qui obtient des informations d'interférence concernant l'interférence de signaux de réception reçus des étiquettes radio (5), lesdites informations d'interférence indiquant des valeurs de rapport de signal/brouillage plus bruit (SINR) au moment de la réception d'une réponse des étiquettes radio (5) avec des nombres d'étiquettes respectifs pour chaque poste émetteur de lecture/écriture et pour chaque poste récepteur de lecture/écriture ; et
une unité (14) de commande de communication qui réalise une communication avec les étiquettes radio (5) en se basant sur une instruction de commande issue de l'appareil (2) de commande de communication radio,
l'appareil (2) de commande de communication radio comprend :
une unité collectrice (20) qui recueille les informations d'interférence obtenues par l'unité d'obtention d'informations d'interférence à partir des dispositifs de lecture/écriture (1A, 1B, 1C) ; et
une unité (22) de détermination de synchronisation qui détermine une synchronisation à laquelle les dispositifs de lecture/écriture (1A, 1B, 1C) transmettent des informations aux étiquettes radio (5) sous la forme d'instructions de commande pour les dispositifs de lecture/écriture (1A, 1B, 1C), en fonction des informations d'interférence recueillies par l'unité collectrice (20), et
l'unité (14) de commande de communication transmet des informations aux étiquettes radio (5) en fonction des informations de commande déterminées par l'unité de détermination de synchronisation (22).
